# EUROPÄISCHE PATENTANMELDUNG

(11) **EP 1 342 420 A1**
(43) Veröffentlichungstag der Anmeldung: **10.09.2003**
(21) Anmeldenummer: 03004356.6
(22) Anmeldetag: 03.03.2003
(51) Int. Cl.: A23L 1/333, A23L 1/33, A23L 1/325

(54) **Verfahren für die Zubereitung eines Produktes welches im aufgeschnittenen Zustand einen "Carpaccio" aus Mollusken und/oder Krustentieren ergibt**

(30) Priorität: 04.03.2002 IT MI20020441
(71) Anmelder: Prinz GmbH, 39042 Bressanone (BZ) (IT)
(72) Erfinder: Aschbacher, Marcus, 39042 Brixen (BZ) (IT); Schanung, Michael, 39042 Brixen (IT); Schanung, Klaus, 39042 Brixen (IT)
(74) Vertreter: Oberosler, Ludwig

(57) **Zusammenfassung**

Das Verfahren ermöglicht es auf industrielle Weise ein Produkt herzustellen welches es durch einfaches in Scheiben Schneiden erlaubt einen "Carpaccio" aus Mollusken und/oder Krustentieren zuzubereiten. Nachdem die Mollusken und/oder Krustentiere sorgfältig gereinigt und gegebenenfalls in Stücke geschnitten worden sind, werden diese in Wasser gekocht und anschließend werden sie abtropfen gelassen, darauf werden sie in eine Hülle aus sterilem, luft- und wasserdichtem, für Lebensmittel geeignetem Material eingepresst. Die Hülle und die verwendeten Vorrichtungen sowie der Raum in welchem obige Arbeitsgänge durchgeführt werden, sind steril. Das derart erzeugte Produkt wird anschließend abgekühlt bis es mindestens die Temperatur von +2°C erreicht. Das Verfahren kann eine weitere Phase enthalten in welcher das Produkt, sofort nach der Abkühlung, in einem Sterilen Raum und mittels steriler Vorrichtungen, in Scheiben geschnitten wird, wobei die Scheiben anschließend unter Vakuum oder in einer Schutzatmosphäre in flache Schalen verpackt werden.

## Beschreibung

Die Erfindung bezieht sich auf ein Verfahren für die Herstellung eines Produktes auf industrieller Ebene, welches es ermöglicht, durch einfaches in Scheiben Schneiden einen "Carpaccio" aus Mollusken und/oder Krustentieren zu erhalten.

Es ist Köchen von höherem Niveau bekannt wie man den sogenannten "Oktopus - Carpaccio" zubereitet. Insbesondere nachdem der Oktopus gereinigt und in Stücke geschnitten worden ist, werden diese ungefähr eine Stunde lang im entsprechend gesalzenen und mit Essig versetzten Wasser gekocht. Nachfolgend lässt man die Oktopus-Stücke abtropfen, es werden gegebenenfalls Gewürze beigegeben und das Ganze wird sehr straff in ein Tuch gewickelt und nach Art einer Wurst mit Spagat eingebunden. Anschließend lässt man das Bündel im Eisschrank über ca. 6 - 8 Stunden auskühlen. Nach erfolgter Kühlung und nachdem der Spagat und das Tuch entfernt worden sind, wird das Produkt in eher dünne Scheiben geschnitten und serviert, diese Scheiben werden in den Restaurants als Oktopus-Carpaccio bezeichnet.

Das oben beschriebene Verfahren weist sicher nicht die Merkmale einer industriellen Verarbeitung auf, da dieses jedes Mal vom Koch durchgeführt wird und das Produkt jeweils sofort konsumiert wird. Dieses Verfahren weist zudem verschiedene Nachteile auf, insbesondere:
- wenig Hygiene: begründet hauptsächlich dadurch dass der Koch die Hände benützt und dadurch dass ein Tuch zum Einwickeln benutzt wird weswegen im Produkt bereits ab Beginn der Abkühlung im Kühlschrank eine bedeutende Menge an Bakterien vorhanden ist welche sich, während der Abkühlung von ca. +80°C auf +2°C (diese letzte Temperatur bringt eine bedeutende Verlangsamung der Vermehrung der Bakterien mit sich), nach jeder Viertelstunde ungefähr verdoppelt, weiters muss berücksichtigt werden, dass die Abkühlung 6-8 Stunden in Anspruch nimmt, mit der Folge dass das Produkt nur für eine extrem kurze Zeit konservierbar ist;
- unzulängliche Festigkeit des Produktes: dieses zerfällt leicht wenn es in Scheiben geschnitten wird, die Stücke oder Abschnitte können aus Gründen der Präsentation nicht der Kundschaft serviert werden weswegen eine nicht zu unterschätzende und nicht vorhersagbare Menge des Produktes ungenutzt verloren geht, was eine präzise Berechnung der Ausbeute des Produktes unmöglich macht, weiters wird dadurch ein Spesenanstieg begründet;
- das Verfahren ist sehr zeitaufwändig was sich notgedrungen beachtlich auf die Spesen auswirkt.

Die Erfindung stellt sich die Aufgabe ein Verfahren zu scharfen um auf industrielle Weise ein Produkt herzustellen von welchem, durch einfaches Aufschneiden in Scheiben, ein "Carpaccio" aus Mollusken und/oder Krustentieren erzeugt wird, welches einen hohen Grad an Hygiene garantiert und eine bedeutend längere Haltbarkeit gegenüber dem, nach der vorher beschriebenen traditionellen Zubereitung hergestellten, Produkt aufweist und zudem von hoher Qualität, aber eindeutig spesengünstiger, ist.

Dieses Ziel wird durch das erfindungsgemäße Verfahren erreicht, indem Mollusken und/oder Krustentiere, infolge sorgfältiger Reinigung und eventuellem Zerschneiden in Stücke, im Wasser gekocht und anschließend abtropfen gelassen werden, dadurch gekennzeichnet, dass die Mollusken und/oder die Krustentiere, oder deren Stücke, nach ihrer Garung und dem Abtropfen, in eine Hülle aus synthetischem, sterilem, luft- und wasserdichtem, für Lebensmittel geeignetem Material eingepresst werden; dabei sind die Hülle und die, für die oben beschriebenen Arbeitsgänge eingesetzten, Vorrichtungen wie auch die Räume in welchen diese Arbeitsgänge durchgeführt werden, steril; das so erhaltene Produkt wird anschließend auf eine Temperatur von mindestens +2°C abgekühlt.

Vorzugsweise erfolgt die Abkühlung des Produktes in Wasser mit Eis, dies ermöglicht eine beachtliche Verkürzung der Kühlzeit gegenüber der Abkühlung im Kühlschrank gemäß dem traditionellen Verfahren, wobei auf diese Weise die Vermehrung der Bakterien, welche eventuell zufällig anwesend sind, entscheidend eingeschränkt wird.

Das so erhaltene Produkt kann im Kühlschrank für eine besonders lange Zeit (mindestens 25 Tage) konserviert werden, mit der Möglichkeit zu jeglichem Zeitpunkt und innerhalb sehr kurzer Zeit einen Carpaccio aus Mollusken und/oder Krustentieren durch einfaches in Scheiben Schneiden zuzubereiten. Das Produkt kann auch tiefgekühlt (z.B. bei -18°C) über eine sehr lange Zeit konserviert werden, dabei muss natürlich beachtet werden dass das Produkt rechtzeitig aufgetaut werden muss.

Vorzugsweise sieht das erfindungsgemäße Verfahren vor, dass dem Kochwasser Küchensalz in einer Menge zwischen 0,5% und 2,0% des Gewichtes und/oder Essig in einer Menge zwischen 0,7% und 3,3% des Volumens beigegeben wird, die Wahl dieser Mengen hängt vom Geschmack den man dem Endprodukt verleihen will, ab.

Weiters sieht das Verfahren ebenfalls vorzugsweise eine Aromatisierungsphase vor, diese kann einleitend durch eine Würzung des Kochwassers und/oder während des Verfahrensablaufes erfolgen, wobei in diesem letzten Fall die Aromatisierung im Zeitabschnitt erfolgt welcher sich von der Abtropffphase bis zur Phase der unter Druck abzufüllenden Hülle erstreckt und darin besteht, dass den gegarten und abgetropften Mollusken und/oder Krustentieren Gewürze beigegeben werden. Die Würzung kann zum Beispiel in der Beigabe von Knoblauchpulver und/oder anderer bekannter Würzstoffe bestehen, die Dosierung dieser hängt natürlich immer vom Geschmack ab den man dem Produkt verleihen will und ist jedenfalls, das erfindungsgemäße Verfahren betreffend, nicht relevant. Vorteilhafterweise erfolgt die Druckabfüllung der Hülle unter Vakuum was weiterhin zur Steigerung der Haltbarkeit des Produktes beiträgt.

Das oben beschriebene industrielle Verfahren kann eine weitere Phase beinhalten welche darin besteht, dass das gekühlte Produkt zwecks Herstellung des Carpaccios in Scheiben geschnitten wird, wobei dafür sterile Vorrichtungen eingesetzt werden, um anschließend in flachen Schalen (wie Wurstwaren) unter Vakuum oder in einer Schutzatmosphäre (z.B. Stickstoff) verpackt zu werden.

Dadurch wird ein Carpaccio aus Mollusken und/oder Krustentieren unter höchster Hygiene hergestellt und welcher bereits für den Verzehr bereit steht, indem nur die flache Schale in welcher er konserviert ist, zu öffnen ist.

Es ist wichtig darauf hinzuweisen, dass das erfindungsgemäße Verfahren so wie die Köche beim traditionellen Verfahren bei der Verarbeitung des Polypen, keine Konservierungsmittel einsetzt.

Die Erfindung wird aus der nachfolgenden Beschreibung eines vereinfachten Verfahrens zur Herstellung, insbesondere eines erfindungsgemäßen Produktes unter Verwertung von Oktopussen, leichter verständlich sein.

### ZUTATEN

- 300 l Wasser
- 100 kg gereinigte und in Stücke geschnittene Oktopusse
- 2 kg Salz
- 3 l Essig
- 0,5 kg Pfeffer
- 0,05 kg Knoblauchpulver

### VERFAHRENSABLAUF

Das Wasser, der Essig, das Salz und die Oktopusstücke werden in einen industriellen Kocher mit herausnehmbarem Korb gegeben. Das Ganze wird ungefähr eine Stunde lang gekocht. Durch Hochheben das Korbes außerhalb der Kochflüssigkeit werden können die gegarten Oktopusstücke gut abgtropfen und werdn mit Pfeffer und Knoblauch gewürzt. Sofort anschließend wird das Ganze (mittels geeigneter automatischer Vorrichtungen ähnlich jener die für das Wursten verwendet werden), unter Vakuum in einen "Darm" aus synthetischem wasserund luftdichtem, für Lebensmittel geeignetem Material eingepresst; dadurch können auf konventionelle Art eine gewisse Anzahl von wesentlich zylindrischen Würsten z.B. mit ca. 8- 12 cm Durchmesser und beliebiger Länge (z.B. von 20 oder 30 cm), welche an ihren beiden Enden auf übliche Art verschlossen sind, hergestellt werden. Die derart hergestellten Würste (welche eine Temperatur von ca. +80°C haben) werden sofort in Wasser mit Eis untergetaucht bis sie eine Temperatur von ca. +2°C erreichen (was ungefähr eine Stunde in Anspruch nimmt). Ab diesem Punkt ist die Wurst für die Aufbewahrung (mindestens für 25 Tage) bei einer Temperatur von +2°C bis +4°C (also in einem normalen Kühlschrank), oder für das Tiefgefrieren für eine wesentlich längere Aufbewahrungszeit, bereit. In beiden Fällen ist natürlich (auch während des Transportes und am Verkaufsort) die sogenannte "Kältebrücke" (wie für alles Tiefgefrorenes) zu berücksichtigen. Vor dem Verzehr der einzelnen Wurst braucht diese nur in Scheiben geschnitten werden (nachdem sie, im Falle dass diese tiefgekühlt ist, aufgetaut worden ist) um so einen verzehrsbereiten Oktopus-Carpaccio zu erhalten.

Als Alternative zu der oben erwähnten Wursttechnik ist der Einsatz von Lebensmittelwannen möglich in welche die Mollusken und/oder deren Stücke, nach der Garung und dem Abtropfen, unter Vakuum, eingefüllt und gepresst werden, das Verfahren ist im Übrigen dem vorher beschriebenen identisch. Gemäß einer fakultativen zusätzlichen Phase des erfindungsgemäßen Verfahrens, werden die abgekühlten einzelnen Produkte anschließend durch übliche sterilisierte Vorrichtungen in steriler Umgebung in Scheiben geschnitten. Die derart erhaltenen Carpaccio-Scheiben werden sofort, immer in steriler Umgebung, unter Vakuum oder in Stickstoffatmosphäre in flache Schalen verpackt. Die flachen Schalen können, wie jene mit Wurstwaren, auf dem Markt angeboten werden.

Es muss darauf hingewiesen werden, dass zur Durchführung des erfindungsgemäßen Verfahrens, an Stelle des Oktopus oder als Zusatz zu diesem andere Krustentiere und/oder Mollusken verwendet werden können, wobei natürlich die Garzeit auf die Mollusken- oder die Krustentierart abgestimmt werden muss. Zum Beispiel bei Verwendung von Garnelen oder Meeresfrüchten werden diese, nachdem sie sorgfältig gereinigt worden sind, nur für einige Minuten gekocht. Im Falle, dass das erfindungsgemäße Produkt durch gleichzeitige Verwendung von unterschiedlichen Mollusken und Krustentierarten hergestellt wird, wird natürlich jede Art nach der jeweils vorgegebenen Zeit gegart. Die Vermischung der einzelnen Arten erfolgt also nach deren Garung, z.B. gleichzeitig mit dem Zusetzen der Gewürze (wie der oben erwähnte Pfeffer und Knoblauch), bei dieser Gelegenheit können auch weitere geeignete Lebensmittel, wie z.B. Pinoli oder Pistazien zugesetzt werden.

## Patentansprüche

1. Verfahren für die Zubereitung eines Produktes von welchem, durch einfaches in Scheiben Schneiden ein "Carpaccio" aus Mollusken und/oder Krustentieren hergestellt werden kann, in welchem die Mollusken und/oder Krustentiere, nachdem diese sorgfältig gereinigt und gegebenenfalls in Stücke geschnitten worden sind, in Wasser gegart und anschließend abtropfen gelassen werden, **dadurch gekennzeichnet dass** die Mollusken und/oder die Krustentiere oder deren Stücke, nachdem sie gegart und abtropfen gelassen worden sind, in eine Hülle aus sterilem, synthetischem, luft- und wasserdichtem, für Lebensmittel geeignetem, Material eingepresst werden; wobei die Hülle und die Vorrichtungen welche für die Durchführung obiger Arbeitsgänge verwendet werden, sowie auch der Raum in welchem diese Arbeitsgänge durchgeführt werden, steril sind und das derartig erhaltene Produkt anschließend auf eine Temperatur von mindestens +2°C abgekühlt wird.

2. Verfahren gemäß Patentanspruch 1, wobei das Einpressen in die Hülle unter Vakuum geschieht.

3. Verfahren gemäß Patentanspruch 1, wobei das Einpressen in die Hülle unter Nutzung der für die Herstellung von Wurstwaren verwendeten Techniken geschieht.

4. Verfahren gemäß Patentanspruch 1, wobei das Einpressen unter Nutzung von wannenförmigen Hüllen geschieht.

5. Verfahren gemäß Patentanspruch 1, wobei dem Kochwasser Kochsalz in einer Menge von 0,2 % bis 3,0% des Gewichtes zugesetzt wird.

6. Verfahren gemäß Patentanspruch 1, wobei dem Kochwasser Essig in einer Menge von 0,7% bis 3,3% des Volumens zugesetzt wird.

7. Verfahren gemäß Patentanspruch 1, in welchem eine einleitende Aromatisierungsphase vorgesehen ist welche in der Würzung des Kochwassers besteht, und/oder eine Aromatisierungsphase durchgeführt wird welche im Zeitabschnitt zwischen der Abtropfphase und dem Einpressen in die Hülle erfolgt.

8. Verfahren gemäß Patentanspruch 1, in welchem eine weitere Phase vorgesehen ist welche vorsieht dass das abgekühlte Produkt in einem sterilen Raum und unter Verwendung steriler Vorrichtungen in Scheiben geschnitten wird und die Schnittware unter Vakuum oder in Schutzatmosphäre in flache Schalen verpackt wird.
